# FASCICULE DE BREVET EUROPEEN

(11) **EP 2 706 890 B1**
(45) Date de publication et mention de la délivrance du brevet: **04.03.2015**
(21) Numéro de dépôt: 12728660.7
(22) Date de dépôt: 11.05.2012
(51) Int. Cl.: A47J 27/00, A47J 36/24

(54) **RECIPIENT DE CHAUFFE AVEC PLUSIEURS PISTES RESISTIVES SERIGRAPHIEES, APPAREIL TRANSPORTABLE COMPRENANT UN TEL RECIPIENT DE CHAUFFE ET PROCEDE D'OBTENTION DU RECIPIENT DE CHAUFFE**
HEIZCONTAINER MIT MEHREREN SIEBBEDRUCKTEN WIDERSTANDSBAHNEN, TRANSPORTIERBARE VORRICHTUNG MIT EINEM SOLCHEN HEIZCONTAINER UND VERFAHREN ZUR HERSTELLUNG DIESES HEIZCONTAINERS
HEATING CONTAINER INCLUDING MULTIPLE SCREEN-PRINTED RESISTIVE TRACKS, A TRANSPORTABLE DEVICE INCLUDING SUCH A HEATING CONTAINER AND METHOD FOR THE PRODUCTION OF SAID HEATING CONTAINER

(30) Priorité: 13.05.2011 FR 1154157
(43) Date de publication de la demande: 19.03.2014
(73) Titulaire: SEB S.A., 69130 Ecully (FR)
(72) Inventeur: GUEGAN, Laurent, F-74150 Lornay (FR)
(74) Mandataire: Novagraaf Technologies
(86) Numéro de dépôt international: PCT/FR2012/051049
(87) Numéro de publication internationale: WO 2012/156627

(56) Documents cités:
- FR-A1- 2 878 723
- FR-A1- 2 925 275
- US-B1- 6 796 218

## Description

La présente invention concerne, de façon générale, lé domaine des appareils transportables chauffants pour le chauffage d'aliments.

Plus particulièrement, l'invention concerne un récipient de chauffe pour le réchauffage d'aliments et un appareil transportable comprenant ce récipient de chauffe, un couvercle amovible adapté pour fermer hermétiquement le récipient de chauffe, et une coque de protection pour protéger le récipient de chauffe. Le récipient de chauffe comprend un fond, et une paroi latérale se dressant depuis le fond. Le fond présente une surface intérieure destinée à recevoir un aliment et une surface extérieure comprenant au moins une piste résistive sérigraphiée. La piste résistive sérigraphiée comprend deux extrémités qui sont chacune reliée à deux plots de connexion électrique pour son alimentation électrique.

Un tel appareil culinaire chauffant transportable ou portable permet de réchauffer des aliments contenus dans le récipient de chauffe en divers endroits tels que sur le lieu de travail, en camping ou en voiture.

Le document de l'art antérieur EP 1 824 366 divulgue un appareil chauffant portable comprenant un récipient de chauffe en inox présentant une surface intérieure destinée à recevoir des aliments, qui est recouverte par une couche de matériau alimentaire tel de l'émail, et une surface extérieure comprenant une ou plusieurs pistes résistives sérigraphiées pour le chauffage du récipient de chauffe. Les pistes résistives sérigraphiées sont indépendantes et sont dédiées à une tension d'alimentation électrique différente (230 V ou 12 V). Des moyens de connexion sont prévus pour chaque piste résistive sérigraphiée. Cet appareil chauffant portable permet de réchauffer des aliments à la fois dans une voiture au moyen d'une alimentation de 12 V, et au bureau, par exemple, au moyen d'une alimentation de 230 V.

Cependant, cet appareil chauffant portable de l'art antérieur ne permet pas d'obtenir une homogénéité de température aussi performante pour chacune des deux pistes résistives sérigraphiées.

La présente invention a ainsi pour but de fournir un récipient de chauffe et un appareil transportable pour le réchauffage d'aliments fonctionnant sous différentes tensions, de conception simple, à moindre coût de fabrication et permettant de réchauffer les aliments de façon homogène quelque soit la tension utilisée.

L'invention concerne un récipient de chauffe pour le réchauffage d'aliments comprenant un fond, et une paroi latérale se dressant depuis le fond, ledit fond présentant une surface intérieure destinée à recevoir un aliment et une surface extérieure sur laquelle sont disposées au moins une première piste résistive sérigraphiée et une deuxième piste résistive sérigraphiée, chaque piste résistive sérigraphiée présentant deux extrémités de connexion reliées chacune à un plot de connexion électrique pour son alimentation électrique.

Selon l'invention, les pistes résistives sérigraphiées sont superposées et séparées par une couche électriquement isolante. La première piste résistive sérigraphiée est la piste qui est déposée en premier sur la surface extérieure du fond du récipient de chauffe.

L'invention concerne également un appareil transportable comprenant un récipient de chauffe tel que défini précédemment, un couvercle amovible adapté à fermer hermétiquement le récipient de chauffe, et une coque protectrice recevant le récipient de chauffe, formant ainsi avec lui une double paroi.

Ainsi, l'invention fournit un récipient de chauffe et un appareil transportable pour le réchauffage d'aliments pouvant fonctionner avec différentes tensions d'alimentation, de conception simple, à moindre coût de fabrication et permettant de réchauffer les aliments de façon homogène quelque soit la tension utilisée. La présence d'une telle couche électriquement isolante permet d'éviter les risques de court-circuit entre les deux pistes résistives sérigraphiées de façon efficace.

La température à la surface du récipient de chauffe est homogène, quelque soit la piste résistive sérigraphiée utilisée. La température à la surface du récipient de chauffe selon l'invention est aussi homogène que celle d'un récipient de chauffe de l'art antérieur ne comprenant qu'une seule piste résistive sérigraphiée. Malgré la superposition de plusieurs couches de matériaux (première piste résistive sérigraphiée + couche électriquement isolante), la dernière piste résistive sérigraphiée ou piste externe transmet la chaleur aux aliments contenus dans le récipient de chauffe quasiment sans perte d'énergie thermique.

Le terme transportable signifie que l'appareil peut être déplacé et utilisé pour transporter des aliments à réchauffer entre des lieux éloignés tels qu'entre le domicile où l'utilisateur a préparé des aliments et le lieu de travail où il souhaite consommer ces aliments, cet appareil pouvant être porté manuellement et sans effort par l'utilisateur. Pour être transportable, un tel appareil doit peser à vide, c'est à dire sans aliment, moins de 5 kilogrammes et ne doit pas excéder un volume d'encombrement parallélépipédique rectangle dont les dimensions sont inférieures à 1 mètre.

L'invention concerne également un procédé de fabrication d'un récipient de chauffe tel que défini précédemment.

Selon l'invention, le procédé de fabrication comprend les étapes successives suivantes :
a) obtention d'un récipient comprenant un fond présentant une surface extérieure;
b) dépôt par sérigraphie d'une première piste résistive sérigraphiée sur la surface extérieure du fond, ladite première piste résistive sérigraphiée comprenant deux extrémités de connexion et étant adaptée pour fonctionner sous une première tension d'alimentation ;
c) cuisson de la première piste résistive sérigraphiée ;
d) dépôt par sérigraphie d'au moins une couche électriquement isolante sur la surface extérieure du fond pour recouvrir au moins la première piste résistive sérigraphiée ;
e) cuisson de la couche électriquement isolante ;
f) dépôt par sérigraphie d'une deuxième piste résistive sérigraphiée sur la couche électriquement isolante, ladite deuxième piste résistive sérigraphiée comprenant deux extrémités de connexion et étant adaptée pour fonctionner sous une deuxième tension d'alimentation;
g) cuisson de la deuxième piste résistives sérigraphiée ;
h) dépôt par sérigraphie de plots de connexion électrique sur au moins les extrémités de connexion respectives des deux pistes résistives sérigraphiées ; i) cuisson des plots de connexion électrique.

Ce procédé de fabrication permet d'obtenir un récipient de chauffe comprenant deux pistes résistives sérigraphiées superposées pouvant fonctionner indépendamment, sous des tensions différentes, et sans risque de court circuit. Ce procédé est simple à mettre en oeuvre et permet de fabriquer un récipient de chauffe permettant de réchauffer les aliments de façon homogène quelque soit la tension utilisée, à moindre coût.

D'autres caractéristiques et avantages de l'invention ressortiront clairement de la description qui en est faite ci-après, à titre indicatif et nullement limitatif, en référence aux dessins annexés, dans lesquels:
- la figure 1 représente une vue éclatée d'un appareil transportable pour le chauffage d'aliments selon un mode de réalisation de l'invention ;
- la figure 2 représente une vue en perspective de cet appareil transportable en mode utilisation;
- la figure 3 représente une vue en perspective montrant le dessous du récipient de chauffe de cet appareil transportable;
- la figure 4 représente une vue éclatée du récipient de chauffe ;
- la figure 5 représente les étapes de fabrication d) à i) du récipient de chauffe selon un mode de réalisation de l'invention.

Comme annoncée précédemment, l'invention concerne un récipient de chauffe 2 pour le réchauffage d'aliments et un appareil transportable 1 comprenant un tel récipient de chauffe 2 pour transporter, stocker, réchauffer de la nourriture préalablement préparée, la servir et la consommer à l'aide d'un seul et même récipient.

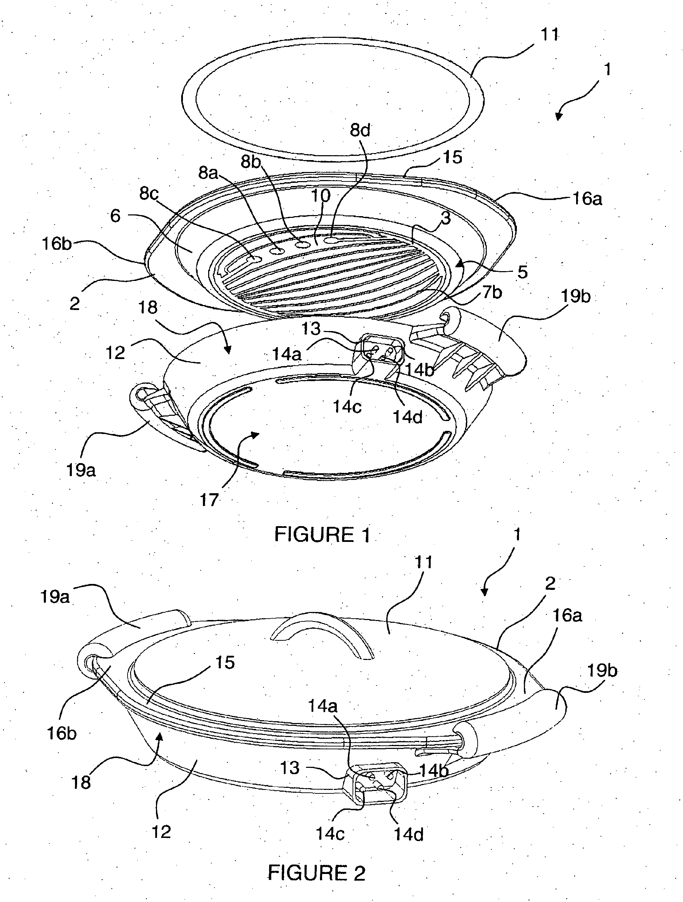

Comme représenté sur les figures 1 et 2, l'appareil transportable 1 pour le réchauffage d'aliments comprend un récipient de chauffe 2, un couvercle amovible 11 adapté pour fermer hermétiquement le récipient de chauffe 2 et une coque protectrice 12 recevant le récipient de chauffe 2, formant ainsi avec lui une double paroi. Le récipient de chauffe 2 comprend un fond 3, et une paroi latérale 6 se dressant depuis le fond 3. Le fond 3 présente une surface intérieure destinée à recevoir un aliment et une surface extérieure 5 sur laquelle sont déposées au moins deux pistes résistives sérigraphiées 7a, 7b dont une première piste résistive sérigraphiée 7a et une deuxième piste résistive sérigraphiée 7b. Chaque piste résistive sérigraphiée 7a, 7b comprend deux extrémités de connexion 9a, 9b, 9c, 9d qui sont chacune reliée à deux plots de connexion électrique 8a, 8b, 8c, 8d pour son alimentation électrique. Les pistes résistives sérigraphiées 7a, 7b et les plots de connexion électrique 8a, 8b, 8c, 8d sont déposées et sont fixées sous le fond 3 du récipient de chauffe 2.

Le récipient de chauffe 2 est en forme d'assiette et présente de préférence une forme circulaire. Le récipient 2 est plus large que profond.

Selon l'invention, les pistes résistives sérigraphiées 7a, 7b sont superposées et séparées par une couche électriquement isolante 10.

Les pistes résistives sérigraphiées 7a, 7b sont adaptées pour être alimentées par des tensions différentes (230 V ou 12 V, par exemple). Ainsi, le récipient de chauffe 2 permet de réchauffer des aliments à la fois dans une voiture au moyen d'une alimentation de 12 V, et au bureau au moyen d'une alimentation de 230 V, par exemple. L'utilisateur n'a plus à utiliser deux récipients de chauffe 2 alimentés par des tensions différentes pour ces.deux utilisations différentes. L'invention permet à l'utilisateur de réaliser une économie en lui évitant d'acheter deux appareils transportables 1 fonctionnant sous des tensions différentes. De plus, l'invention permet de réduire les problèmes d'encombrement liés à l'utilisation de deux appareils transportables 1.

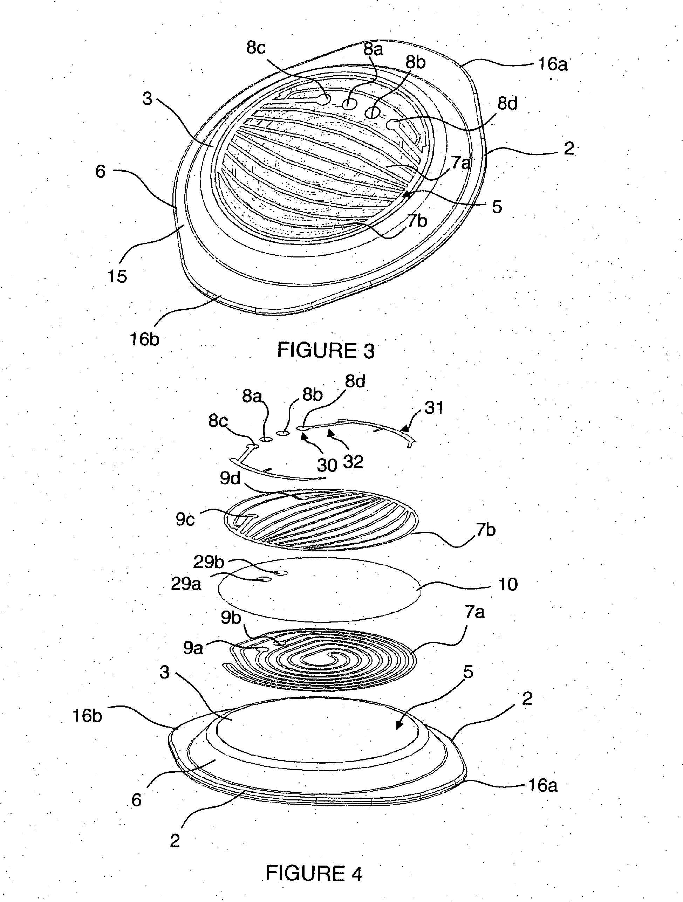

La couche électriquement isolante 10 recouvre toute la surface extérieure 5 du fond 3 ou presque, exceptées les extrémités dé connexion 9a, 9b de la première piste résistive sérigraphiée 7a. Les plots de connexion électrique 8a, 8b de la première piste résistive sérigraphiée 7a peuvent ainsi être déposés sur les extrémités de connexion 9a, 9b de la première piste résistive sérigraphiée 7a. La figure 3 représente le dessous du récipient de chauffe. La couche électriquement isolante 10 est représentée arbitrairement transparente pour les besoins de représentation et pour permettre de visualiser la première piste résistive sérigraphiée 7a (en pointillé). La figure 4 représente une vue éclatée du récipient de chauffe. La couche électriquement isolante 10 comprend deux orifices 29a, 29b positionnés en regard des deux extrémités de connexion 9a, 9b respectives de la première piste résistive sérigraphiée 7a permettant ainsi le dépôt ultérieurement des deux plots de connexion électrique 8a, 8b sur ces deux extrémités de connexion 9a, 9b. De préférence, la couche électriquement isolante 10 a une forme de disque. Cette forme est plus facile à mettre en oeuvre.

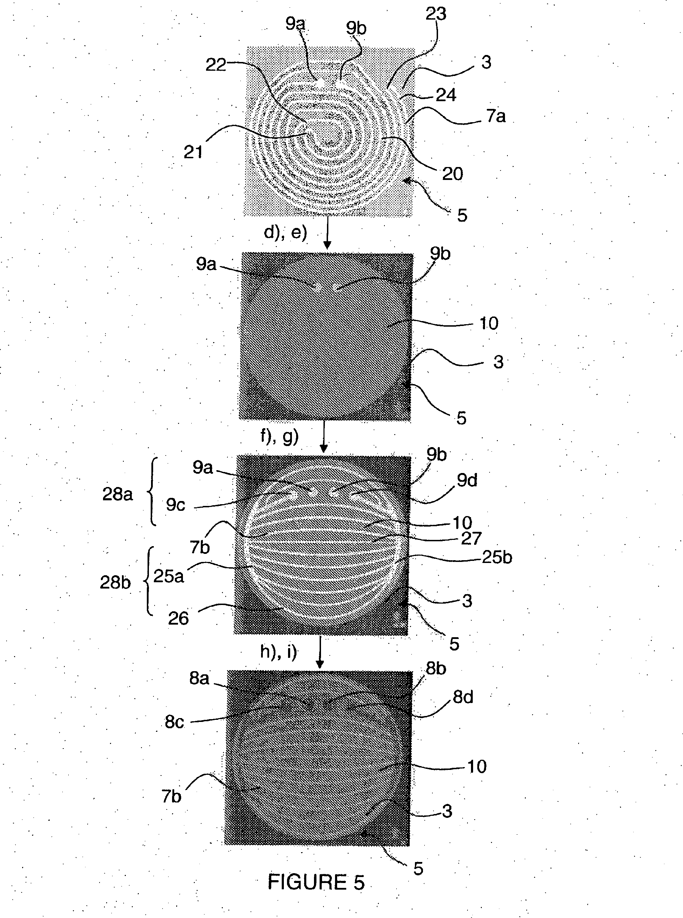

Dans l'exemple des figures 1 à 5, le récipient de chauffe 2 comprend une première piste résistive sérigraphiée 7a alimentée par une tension de 230 V, et une deuxième piste résistive sérigraphiée 7b alimentée par une tension de 12 V. Les pistes résistives sérigraphiées 7a, 7b sont superposées et séparées par la couche électriquement isolante 10.

En variante, le récipient de chauffe 2 peut comprendre plus de deux pistes résistives sérigraphiées 7a, 7b superposées, comme par exemple trois couches de pistes résistives sérigraphiées superposées (non représentées). Une couche électriquement isolante 10 est disposée entre deux pistes résistives sérigraphiées successives.

Dans l'exemple des figures 1 à 5, la première piste résistive sérigraphiée 7a est la première piste qui est déposée sur la surface extérieure 5 du fond 3 du récipient de chauffe 2. La première piste résistive sérigraphiée 7a est la piste la plus proche du fond 3 du récipient de chauffe 2.

Lorsque le récipient de chauffe 2 est en verre, la première piste résistive sérigraphiée 7a est déposée directement sur la surface extérieure 5 du fond 3 par sérigraphie. Elle est en contact direct avec la surface extérieure 5 du fond 3.

Lorsque le récipient de chauffe 2 est en inox, la surface extérieure 5 du fond 3 de ce dernier est préalablement recouverte par une couche d'émail diélectrique déposée par sérigraphie. La première piste résistive sérigraphiée 7a est alors déposée sur cette couche d'émail diélectrique.

La couche électriquement isolante 10 est déposée par sérigraphie sur toute la surface extérieure 5 du fond 3, excepté sur les extrémités de connexion 9a, 9b, de la première piste résistive sérigraphiée 7a.

Ainsi, lorsque la première piste résistive sérigraphiée 7a est déposée, la couche électriquement isolante 10 est déposée sur cette dernière de façon à ce qu'elle ne recouvre pas ses extrémités de connexion 9a, 9b. Ceci permet de déposer ultérieurement les plots de connexion électrique 8a, 8b sur les extrémités de connexion 9a, 9b de la première piste résistive sérigraphiée 7a.

La couche électriquement isolante 10 comprend plusieurs sous-couches de matériaux électriquement isolants. De préférence, la couche électriquement isolante 10 ne comprend que des sous-couches de matériaux électriquement isolants. La couche électriquement isolante 10 peut comprendre deux à trois sous-couches de matériaux électriquement isolants. Chaque sous-couche de matériaux électriquement isolant peut être constituée d'un émail diélectrique déposé par sérigraphie. De préférence, chaque sous-couche de matériaux électriquement isolant est à base de matériaux polymère isolant déposé par sérigraphie. Ce matériau polymère isolant peut être choisi parmi un polyamide imide (PAI), un polyimide (PI), un polyéther sulfone (PES), un polyéther imide (PEI), une polyphénylène sulfone (PPS), une silicone et une résine époxy, par exemple.

La deuxième piste résistive sérigraphiée 7b est ensuite déposée par sérigraphie sur la couche électriquement isolante 10.

Le motif formant la première piste résistive sérigraphiée 7a est différent du motif formant la deuxième piste résistive sérigraphiée 7b, comme représenté sur les figures 3 à 5

En variante, la couche électriquement isolante 10 peut recouvrir seulement la première piste résistivé sérigraphiée 7a, sans recouvrir le reste de la surface extérieure 5 du fond 3 et sans recouvrir les deux extrémités de connexion 9a, 9b, 9c, 9d. Le motif de la première piste résistive sérigraphiée 7a et celui de la couche électriquement isolante 10 sont alors identiques et parfaitement superposés. La deuxième piste résistive sérigraphiée 7b peut être déposée seulement sur la couche électriquement isolante 10 en formant le même motif, de façon à former un empilement de trois couches parfaitement superposées.

En variante, la deuxième piste résistive sérigraphiée 7b peut être déposée sur la surface extérieure 5 du fond 3 sans suivre le motif de la première piste résistive sérigraphiée 7a. La surface extérieure 5 du fond 3 du récipient de chauffe 2 n'est pas entièrement recouverte par la couche électriquement isolante 10, ce qui permet d'économiser du matériau constituant la couche électriquement isolante 10. De plus, ce mode de réalisation est particulièrement intéressant lorsque le récipient de chauffe 2 est en verre. Ainsi, il est possible de conserver les propriétés de transparence du verre pour obtenir un impact visuel.

Selon un mode de réalisation possible évoqué précédemment, le récipient de chauffe 2 peut être en verre. De préférence, le récipient de chauffe 2 est entièrement en verre. Seules les pistes sérigraphiées 7a, 7b, la couche électriquement isolante 10, et les plots de connexion 8a, 8b, 8c, 8d ne sont pas en verre. Le récipient de chauffe 2 en verre est formé d'une seule pièce, exceptés la piste sérigraphiée et les plots de connexion 8a, 8b, 8c, 8d. Le récipient de chauffe 2 est fabriqué lors d'une étape de moulage. Le verre constituant le récipient de chauffe 2 est un verre alimentaire qui peut être un verre trempé du type boro-silicate ou fluosilicate ou vitro-céramique.

De préférence, le verre est du type boro-silicate car c'est un verre alimentaire qui peut être facilement moulé et qui est résistant aux températures appliquées pour chauffer les aliments.

Les pistes résistives sérigraphiées 7a, 7b sont composées d'un matériau polymère chargé de nickel. Ce matériau polymère est choisi parmi un polyamide imide (PAI), un polyimide (PI), un polyéther sulfone (PES), un polyéther imide (PEI), une polyphénylène sulfone (PPS), une silicone et une résine époxy, par exemple.

Le nickel à la propriété intrinsèque d'avoir un fort coefficient de température (environ 0,005 °C⁻¹). C'est-à-dire que plus la température de la piste résistive sérigraphiée 7a, 7b augmente, plus sa valeur ohmique augmente, et plus la puissance diminue.

La température du récipient de chauffe 2 finit par se stabiliser sans avoir besoin de moyen de régulation du type thermostat ou de minuterie.

Le chauffage sans régulation thermique (c'est-à-dire sans régulation tout ou rien via un thermostat) permet d'éviter de « stresser » les aliments, la montée de température étant progressive. Grâce à ce mode de réalisation de l'invention, l'aliment n'est ni surchauffé, ni refroidi transitoirement (ce qui serait le cas si un thermostat était utilisé durant la cuisson). De plus, l'invention permet de diminuer les coûts de fabrication puisque l'on n'utilise pas de thermostat. La combinaison d'un récipient de chauffe en verre et d'une piste en polymère chargée de nickel permet d'obtenir une montée en température encore plus douce puisque le verre conduit très peu la chaleur. Il y a donc peu de risque que les aliments soient carbonisés, ou stressés thermiquement.

Selon un mode de réalisation possible de l'invention, le procédé de fabrication du récipient de chauffe 2 comprend les étapes suivantes :
- obtention d'un récipient en verre comprenant un fond 3 présentant une surface extérieure 5, par un procédé de moulage ;
- dépôt par sérigraphie d'une première piste résistive sérigraphiée 7a sur la surface extérieure 5 du fond 3, ladite première piste résistive sérigraphiée 7a étant composée d'un polymère chargé en nickel, comprenant deux extrémités de connexion 9a, 9b et étant adaptée pour fonctionner sous une première tension d'alimentation ;
- cuisson à une température d'environ 300°C;
- dépôt par sérigraphie d'au moins une couche électriquement isolante 10 à base de polymère sans charge électriquement conductrice sur la surface extérieure 5 du fond 3 pour recouvrir au moins la première piste résistive sérigraphiée 7a ;
- cuisson à une température d'environ 300°C;
- dépôt par sérigraphie d'une deuxième piste résistive sérigraphiée 7b sur la couche électriquement isolante 10, ladite deuxième piste résistive sérigraphiée 7b étant composée d'un polymère chargé en nickel, comprenant deux extrémités de connexion 9c, 9d et étant adaptée pour fonctionner sous une deuxième tension d'alimentation ;
- cuisson à une température d'environ 300°C;
- dépôt par sérigraphie de plots de connexion électrique 8a, 8b, 8c, 8d sur les extrémités de connexion 9a, 9b, 9c, 9d respectives des deux pistes résistives sérigraphiées 7a, 7b ;
- cuisson à une température d'environ 300°C.

Les plots de connexion 8a, 8b, 8c, 8d peuvent être constitués d'un matériau polymère chargé en argent et peuvent éventuellement être cuits ensembles avec la deuxième piste résistive dans un four à 300°C, sous réserve d'avoir effectué un séchage préalable du fond.

L'utilisation de telles pistes résistives sérigraphiées 7a, 7b en polymère permet de réaliser des recuits à des températures plus basses que celles des procédés de l'art antérieur, réduisant le coût de fabrication, et améliorant l'impact sur l'environnement.

Eventuellement, une couche de protection peut recouvrir la totalité de la deuxième piste résistive sérigraphiée 7b à l'exception des plots de connexion 8a, 8b, 8c, 8d. Cette couche de protection est cuite à 300°C. Le fond 3 et la deuxième piste résistive sérigraphiée 7b sont alors protégés des agressions extérieures grâce à la couche de protection (non représentée).

Selon un autre mode de réalisation, le récipient de chauffe 2 peut être en inox et comprendre des pistes résistives sérigraphiées 7a, 7b constituées d'un émail résistif.

Le procédé de fabrication d'un tel récipient de chauffe 2 comprend :
- une étape d'emboutissage pour former un récipient en inox ;
- une étape de dépôt d'un émail ou de traitement par polissage électrolytique sur la surface interne du récipient en inox ;
- une étape de recuit à 850°C dans le cas d'un dépôt d'émail ;
- une étape de dépôt d'une couche d'émail diélectrique ou isolant, appliquée en une fois ou deux fois par pistolage ou en trois ou cinq couches par sérigraphie pour permettre l'accroche et l'isolation électrique des pistes résistives sérigraphiées 7a, 7b ;
- une étape de recuit à 850°C;
- une étape de dépôt par sérigraphie d'une première piste résistive sérigraphiée 7a sur la couche d'émail diélectrique, ladite première piste résistive sérigraphiée 7a étant constituée d'un émail résistif, comprenant deux extrémités de connexion 9a, 9b et étant adaptée pour fonctionner sous une première tension d'alimentation;
- une étape de recuit à 850°C;
- une étape de dépôt par sérigraphie d'au moins une couche électriquement isolante 10 sur la surface extérieure 5 du fond 3 pour recouvrir au moins la première piste résistive sérigraphiée 7a ;
- une étape de recuit à 850°C;
- une étape de dépôt par sérigraphie d'une deuxième piste résistive sérigraphiée 7b sur la couche électriquement isolante 10, ladite deuxième piste résistive sérigraphiée 7b étant constituée d'un émail résistif, comprenant deux extrémités de connexion 9c, 9d et étant adaptée pour fonctionner sous une deuxième tension d'alimentation ;
- une étape de recuit à 850°C; et
- une étape de dépôt par sérigraphie de plots de connexion électrique 8a, 8b, 8c, 8d en argent sur les extrémités de connexion 9a, 9b, 9c, 9d respectives des deux pistes résistives sérigraphiées 7a, 7b.

Les plots de contact en argent peuvent être cuits ensembles avec la deuxième piste résistive 7b dans un four à 700°C, sous réserve d'avoir effectué un séchage préalable du fond.

Enfin, une couche de protection peut recouvrir éventuellement la totalité de la deuxième piste résistive sérigraphiée 7b à l'exception des portions des extrémités de connexions. Cette couche de protection est alors cuite à 650°C (non représentée).

Comme mentionné précédemment, l'invention concerne également un appareil transportable 1. L'appareil transportable 1 comprend un connecteur 13 unique auquel sont reliés les deux plots de connexion électrique 8a, 8b, 8c, 8d des deux pistes résistives sérigraphiées 7a, 7b respectives. Le connecteur 13 est solidaire de la coque protectrice 12 et est accessible depuis l'extérieur. On obtient un appareil transportable 1 de conception simple avec un seul connecteur à assembler au lieu de deux. Les coûts de fabrication sont réduits.

La coque protectrice 12, qui est préférentiellement en polypropylène, peut être surmoulée par injection autour du connecteur 13 qui est étanche. Ce connecteur 13 a pour fonction de permettre un passage étanche de conducteurs électriques (broches) entre l'extérieur et l'intérieur de la coque protectrice 12. Eventuellement, ce connecteur 12 peut posséder un voyant lumineux intégré signalant la mise sous tension d'une des pistes résistives sérigraphiées 7a, 7b.

Le connecteur 13 est un connecteur mâle 13 comprenant quatre broches 14a, 14b, 14c, 14d dont deux broches 14a, 14b dédiées à une première tension d'alimentation et deux autres broches 14c, 14d dédiées à une deuxième tension d'alimentation.

Les broches 14a, 14b, 14c, 14d du connecteur mâle 13 sont reliées électriquement aux plots de connexions électriques 8a, 8b, 8c, 8d respectifs des pistes résistives sérigraphiées 7a, 7b par des câbles électriques, isolés (non illustrés), à l'intérieur de la coque protectrice 12. Dans l'exemple des figures 1 et 2, deux broches 14a, 14b dédiées à une tension d'alimentation en 230 V sont reliées aux deux plots de connexions électriques 8a, 8b de la première piste résistive sérigraphiée 7a. Les deux broches 14c, 14d dédiées à une tension d'alimentation en 12 V sont reliées aux deux plots de connexions électriques 8c, 8d de la deuxième piste résistive sérigraphiée 7b.

L'appareil transportable 1 comprend un cordon d'alimentation électrique amovible (non représenté) adapté à se connecter au connecteur mâle 13 pour lui fournir une tension d'alimentation prédéfinie (230 V, 110 V, ou 12 V par exemple). Le cordon d'alimentation comprend un connecteur femelle à l'une de ses extrémités. Ce connecteur femelle comporte quatre orifices adaptés à recevoir les quatre broches 14a, 14b, 14c, 14d respectives du connecteur mâle 13. Deux des orifices du connecteur femelle sont adaptés à fournir la tension d'alimentation prédéfinie (230 V, par exemple) et à recevoir les deux broches 14a, 14b du connecteur mâle 13 dédiées à cette tension d'alimentation prédéfinie. Les deux autres orifices du connecteur 13 femelle masquent les deux autres broches 14c, 14d du connecteur mâle 13 non utilisées et dédiées à une autre tension d'alimentation différente (12 V, par exemple).

Lorsque le récipient de chauffe 2 fonctionne selon deux tensions différentes, il est apte à être alimenté par deux cordons d'alimentation électrique amovibles différents, chaque cordon d'alimentation électrique étant dédié à une tension.

La sélection de la tension se fait simplement par le choix du cordon d'alimentation électrique (230V ou 12V par exemple) qui est raccordé au récipient de chauffe 2. Ceci permet d'assurer la sécurité de l'utilisateur.

Lorsqu'un cordon d'alimentation électrique dédié à une tension est connecté au récipient de chauffe 2, il n'est pas possible de connecter un autre cordon d'alimentation électrique dédié à une autre tension car les broches 14a, 14b, 14c, 14d du connecteur mâle 13 non utilisées pour l'alimentation électriques sont occultées par le connecteur femelle du cordon d'alimentation électrique.

L'exemple des figures 1 et 2 représente un récipient de chauffe 2 en verre.

Le fond 3 du récipient de chauffe 2 est sensiblement plat et est solidaire d'une paroi latérale 6 circulaire. La paroi latérale 6 du récipient 2 va en s'évasant en partant du fond 3 du récipient 2 et en allant vers le bord supérieur du récipient, formant ainsi une assiette chauffante transportable. Un tel récipient peut être réalisé par des procédés connus pour fabriquer des récipients en verre.

Le récipient de chauffe 2 comprend un rebord périphérique supérieur 15 s'étendant depuis la paroi latérale 6 du récipient de chauffe 2, au niveau de sa partie supérieure, et vers l'extérieur du récipient de chauffe 2. Le rebord périphérique supérieur 15 présente une surface inférieure et une surface supérieure adaptée à supporter le couvercle amovible 11.

Le couvercle amovible 11 est adapté pour fermer hermétiquement le récipient 2, et possède pour cela un joint compressible sur toute la surface de contact entre le couvercle et la surface supérieure du rebord périphérique supérieur 15 du récipient de chauffe 2 (non représenté). Ce joint compressible est préférentiellement en caoutchouc nitrile (NBR) ou en silicone et peut être un joint de type autocuiseur. Le couvercle 11 peut être en polypropylène.

Ce récipient de chauffe 2 peut être ainsi fermé hermétiquement au moins durant sa phase de transport afin d'éviter de renverser la nourriture, afin de la maintenir au chaud si elle a été préalablement préchauffée ou afin d'éviter de la dégrader.

Les pistes résistives sérigraphiées 7a, 7b sont constituées d'une pâte conductrice sérigraphiée en forme de piste allongée.

La surface dé contact entre les pistes résistives sérigraphiées 7a, 7b et le récipient de chauffe 2 est importante. Elle permet d'améliorer le rendement de l'appareil ainsi que l'homogénéité de chauffe. Cette surface de contact représente au moins 40% de la surface utile qui est aussi appelée surface de chauffe du fond 3 du récipient de chauffe 2. En d'autres termes, les pistes résistives sérigraphiées 7a, 7b recouvrent au moins 40% de la surface extérieure 5 du fond 3.

Préférentiellement, au moins 60% de la surface de chauffe du fond 3 est recouverte par les pistes résistives sérigraphiées 7a, 7b. Cette caractéristique permet d'avoir une température de chauffe relativement homogène sur le fond 3 du récipient de chauffe 2 évitant ainsi les points de dégradation et de brûlure des aliments.

Les pistes résistives sérigraphiées 7a, 7b obtenues par sérigraphie ont l'avantage de fournir un moyen de chauffe facile à produire industriellement et peu coûteux.

La puissance de chauffe surfacique est définie judicieusement pour permettre le réchauffage d'aliments tout en évitant qu'il y ait carbonisation de ces aliments. Pour cela, la piste est idéalement prévue pour que les aliments présents dans le récipient de chauffe puissent être réchauffés au delà de 63°C et dans un temps de l'ordre de 15 à 25 minutes pour un plat individuel en sauce de 400 grammes.

Les pistes résistives sérigraphiées 7a, 7b sont idéalement prévues pour fonctionner soit avec une alimentation en 12 Volts pour permettre un branchement sur batterie telle que la batterie d'un véhicule, soit avec une alimentation en 230 Volts ou autre.

Le récipient de chauffe 2 en verre peut comporter au moins deux compartiments séparés par une paroi de séparation (non représenté). Cette paroi de séparation est en verre et est obtenue par moulage en même temps que le reste du récipient de chauffe 2.

Le récipient de chauffe 2 comporte deux poignées 16a, 16b disposées à sa périphérie pour son transport, chaque poignée 16a, 16b étant formée par le prolongement du rebord périphérique supérieur 15. Chaque poignée 16a, 16b est en verre.

La coque protectrice 12 est destinée à recevoir le récipient de chauffe 2, formant ainsi une double paroi. Un joint d'étanchéité est disposé entre la coque protectrice 12 et le rebord périphérique supérieur 15 du récipient de chauffe 2.

La coque protectrice 12 comprend un fond 17, une paroi latérale 18 se dressant depuis le fond 17, et deux poignées opposées 19a, 19b s'étendant depuis la paroi latérale 18 et vers l'extérieur de la coque protectrice 16.

Comme dit précédemment, l'appareil transportable 1 comprend un joint d'étanchéité disposé entre le récipient de chauffe 2 et la coque protectrice 12. Plus précisément, ce joint d'étanchéité est disposé entre la surface inférieure du rebord périphérique supérieur 15 du récipient de chauffe 2 et la coque protectrice 12. Le joint d'étanchéité peut être un joint à lèvre ou un joint torique, par exemple.

De cette façon, l'espace entre le récipient de chauffe 2 et la coque protectrice 12 qui comprend des composants électriques est étanche, permettant ainsi le lavage et la manipulation de l'appareil transportable 1 sans risque d'électrocution ou de brûlure.

Cet espace entre le récipient de chauffe 2 et la coque protectrice 12 est rempli d'air, formant ainsi une double paroi. Cet espace permet de fournir une isolation thermique.

A titre d'exemple, et comme représentée sur la figure 3, la première piste résistive sérigraphiée 7a dédiée à une alimentation en 230 V s'étend sur la surface extérieure 5 du fond 3 du récipient de chauffe 2 en formant sensiblement une spire.

Les deux extrémités de connexion électrique 9a, 9b, sont fixées sur le fond 3 du récipient de chauffe 2 et sont positionnées l'une à côté de l'autre, à proximité de la périphérie du fond 3 du récipient de chauffe 2.

La première piste résistive sérigraphiée 7a comprend une première spirale 20 partant d'une première extrémité de connexion électrique 9b, et s'enroulant dans un premier sens de rotation autour du centre du fond 3, jusqu'à une boucle centrale 21 positionnée au voisinage du centre du fond 3.

La première piste résistive sérigraphiée 7a comprend une deuxième spirale 22 partant de la boucle centrale 21, et s'enroulant dans un second sens de rotation opposé au premier sens de rotation autour du centre du fond 3, en longeant la première spirale 20, jusqu'à une boucle périphérique 23 positionnée à la périphérie du fond 3.

La première piste résistive sérigraphiée 7a comprend une troisième spirale 24 partant de la boucle périphérique 23, et s'enroulant selon le premier sens de rotation autour du centre du fond 3, en longeant la deuxième spirale 22, jusqu'à la deuxième extrémité de connexion électrique 9a. D'autres formes de pistes résistives sont également possibles.

La deuxième piste résistive sérigraphiée 7b dédiée à une tension de 12 V présente une forme ou un motif différent de celle de la première piste résistive sérigraphiée 7a, comme illustrée sur les figures 3 à 5. La deuxième piste résistive sérigraphiée 7b comprend deux portions de piste périphériques 25a, 25b opposées en forme d'arc de cercle, disposées en périphérie du fond 3 du récipient de chauffe 2. La deuxième piste résistive sérigraphiée 7b comprend également plusieurs portions de piste transversales 26 en forme d'arc de cercle comprenant chacune deux extrémités. Chacune de ces extrémités est reliée à l'une des deux portions de piste périphériques 25a, 25b. Dans l'exemple des figures 3 à 5, les portions de piste transversales 26 sont au nombre de 11, et présentent une courbure orientée vers le centre du fond 3 du récipient de chauffe 2. Elles sont réparties transversalement entre les deux portions de piste périphériques 25a, 25b. La deuxième piste résistive sérigraphiée 7b est formée d'une première série 28a de portions de piste transversales contigües ayant chacune une courbure orientée selon une première direction, et une deuxième série 28b de portions de piste transversales contigües ayant chacune une courbure orientée selon une deuxième direction, opposée à la première direction. La première 28a et la deuxième 28b série de portions de piste transversales 26 forment deux motifs distincts, sensiblement symétriques par rapport à une portion de piste centrale 27 passant par le centre du fond 3 du récipient de chauffe 2. La première série 28a de portions de piste transversales 26 est disposée dans une première moitié de fond 3, et la deuxième série 28b de portions de piste transversales 26 est disposée dans une deuxième moitié de fond 3, le fond 3 ayant une forme de disque.

Comme représenté sur la figure 4, chaque plot de connexion électrique 8c, 8d de la deuxième piste résistive sérigraphiée 7b comprend une partie.en forme de disque 30 destinée à recouvrir entièrement les deux extrémités de connexion 9c, 9d de la deuxième piste résistive sérigraphiée 7b. Cette partie en forme de disque 30 est reliée à une partie en arc de cercle 31 via une partie rectiligne 32. La partie en arc de cercle 31 recouvre une des portions de piste périphériques 25a, 25b de la deuxième piste résistive sérigraphiée 7b.

## Revendications

1. Récipient de chauffe (2) pour un appareil transportable (1) destiné au réchauffage d'aliments, ledit récipient de chauffe (2) comprenant un fond (3) et une paroi latérale (6) se dressant depuis le fond (3), ledit fond (3) présentant une surface intérieure destinée à recevoir un aliment et une surface extérieure (5) sur laquelle sont disposées au moins une première piste résistive sérigraphiée (7a) et une deuxième piste résistive sérigraphiée (7b), chaque piste résistive sérigraphiée (7a, 7b) présentant deux extrémités de connexion (9a, 9b, 9c, 9d) reliées chacune à un plot de connexion électrique (8a, 8b, 8c, 8d) pour son alimentation électrique, **caractérisé en ce que** les pistes résistives sérigraphiées (7a, 7b) sont superposées et séparées par une couche électriquement isolante (10).

2. Récipient de chauffe (2) selon la revendication 1, **caractérisé en ce que** les pistes résistives sérigraphiées (7a, 7b) sont alimentées par des tensions différentes.

3. Récipient de chauffe (2) selon la revendication 1 ou 2, **caractérisé en ce que** la couche électriquement isolante (10) recouvre toute la surface extérieure (5) du fond (3), excepté les extrémités de connexion (9a, 9b) de la première piste résistive sérigraphiée (7a).

4. Récipient de chauffe (2) selon l'une quelconque des revendications 1 à 3, **caractérisé en ce que** la couche électriquement isolante (10) comprend plusieurs sous-couches de matériaux électriquement isolants.

5. Récipient de chauffe (2) selon la revendication 4, **caractérisé en ce que** les sous-couches de matériaux électriquement isolants sont formées d'au moins un matériau polymère isolant.

6. Récipient de chauffe (2) selon l'une quelconque des revendications 1 à 5, **caractérisé en ce que** la première piste résistive sérigraphiée (7a) forme un motif qui est différent du motif formant la deuxième piste résistive sérigraphiée (7b).

7. Récipient de chauffe (2) selon l'une quelconque des revendications 1 à 6, **caractérisé en ce que** la première piste résistive sérigraphiée (7a) est alimentée par une tension de 230 V, et la deuxième piste résistive sérigraphiée (7b) est alimentée par une tension de 12 V, la première piste résistive sérigraphiée (7a) étant la piste la plus proche du fond (3) du récipient de chauffe (2).

8. Appareil transportable (1), **caractérisé en ce qu'**il comprend un récipient de chauffe (2) tel que défini par l'une quelconque des revendications précédentes, ledit appareil transportable (1) comprenant un couvercle amovible (11) adapté pour fermer hermétiquement le récipient de chauffe (2), et une coque protectrice (12) recevant le récipient de chauffe (2), formant ainsi avec lui une double paroi.

9. Appareil transportable (1) selon la revendication 8, **caractérisé en ce qu'**il comprend un connecteur (13) unique auquel sont reliés tous les plots de connexion électrique (8a, 8b, 8c, 8d) des deux pistes résistives sérigraphiées (7a, 7b).

10. Appareil transportable (1) selon la revendication 9, **caractérisé en ce que** le connecteur (13) est un connecteur mâle (13) comprenant quatre broches (14a, 14b, 14c, 14d) dont deux broches (14a, 14b) dédiées à une première tension d'alimentation et reliées à la première piste résistive sérigraphiée (7a), et deux autres broches (14c, 14d) dédiées à une deuxième tension d'alimentation et relié à la deuxième piste résistive sérigraphiée (7b).

11. Appareil transportable (1) selon la revendication 10, **caractérisé en ce qu'**il comprend un cordon d'alimentation amovible adapté à se connecter au connecteur mâle (13) pour lui fournir une tension d'alimentation prédéfinie, ledit cordon d'alimentation comprenant un connecteur femelle à l'une de ses extrémités comportant quatre orifices adaptées à recevoir les quatre broches (14a, 14b, 14c, 14d) du connecteur mâle (13), deux des orifices du connecteur femelle étant adaptés à fournir ladite tension d'alimentation prédéfinie et à recevoir deux broches (14a, 14b) du connecteur mâle (13) dédiées à cette tension d'alimentation prédéfinie, et les deux autres orifices du connecteur (13) femelle étant adaptés à masquer les deux autres broches (14c, 14d) du connecteur mâle (13) dédiées à une autre tension d'alimentation.

12. Procédé de fabrication d'un récipient de chauffe (2) tel que défini par l'une quelconque des revendications 1 à 7, **caractérisé en ce qu'**il comprend les étapes successives suivantes :
a) obtention d'un récipient comprenant un fond (3) présentant une surface extérieure (5) ;
b) dépôt par sérigraphie d'une première piste résistive sérigraphiée (7a) sur la surface extérieure (5) du fond (3) du récipient de chauffe (2), ladite première piste résistive sérigraphiée (7a) comprenant deux extrémités de connexion (9a, 9b) et étant adaptée pour fonctionner sous une première tension d'alimentation;
c) cuisson de la première piste résistive sérigraphiée (7a) ;
d) dépôt par sérigraphie d'au moins une couche électriquement isolante (10) sur la surface extérieure (5) du fond (3) pour recouvrir au moins la première piste résistive sérigraphiée (7a);
e) cuisson de la couche électriquement isolante (10) ;
f) dépôt par sérigraphie d'une deuxième piste résistive sérigraphiée (7b) sur la couche électriquement isolante (10), ladite deuxième piste résistive sérigraphiée (7b) comprenant deux extrémités de connexion (9c, 9d) et étant adaptée pour fonctionner sous une deuxième tension d'alimentation ;
g) cuisson de la deuxième piste résistive sérigraphiée (7b) ;
h) dépôt par sérigraphie de plots de connexion électrique (8a, 8b, 8c, 8d) sur au moins les extrémités de connexion (9a, 9b, 9c, 9d) des deux pistes résistives sérigraphiées (7a, 7b) ;
i) cuisson des plots de connexion électrique (8a, 8b, 8c, 8d).

13. Procédé de fabrication d'un récipient dé chauffe (2) selon la revendication 12, **caractérisé en ce que**, lors de l'étape de dépôt par sérigraphie de la couche électriquement isolante (10), les deux extrémités de connexion (9a, 9b) de la première piste résistive sérigraphiée (7a) ne sont pas recouvertes par la couche électriquement isolante (10).

## Patentansprüche

1. Wärmespeicher (2) für ein tragbares Gerät (1), das für die Wiedererwärmung von Lebensmitteln bestimmt ist, wobei der Wärmspeicher (2) einen Boden (3) und eine Seitenwand (6), die vom Boden (3) aufragt, umfasst, wobei der Boden (3) eine innere Oberfläche, die dazu bestimmt ist, ein Lebensmittel aufzunehmen, und eine äußere Oberfläche (5), auf der wenigstens eine erste Siebdruck-Widerstandsbahn (7a) und eine zweite Sieb-druck-Widerstandsbahn (7b) angeordnet sind, aufweist, wobei jede Siebdruck-Widerstandsbahn (7a, 7b) zwei Verbindungsenden (9a, 9b, 9c, 9d) aufweist, die jeweils mit einer elektrischen Anschlussfläche (8a, 8b, 8c, 8d) für ihre elektrische Versorgung verbunden sind, **dadurch gekennzeichnet, dass** die Siebdruck-Widerstandsbahnen (7a, 7b) einander überlagert und durch eine elektrisch isolierende Schicht (10) getrennt sind.

2. Wärmespeicher (2) nach Anspruch 1, **dadurch gekennzeichnet, dass** die Siebdruck-Widerstandsbahnen (7a, 7b) mit unterschiedlichen Spannungen versorgt werden.

3. Wärmespeicher (2) nach Anspruch 1 oder 2, **dadurch gekennzeichnet, dass** die elektrisch isolierende Schicht (10) die gesamte äußere Oberfläche (5) des Bodens (3) mit Ausnahme der Verbindungsenden (9a, 9b) der ersten Siebdruck-Widerstandsbahn (7a) abdeckt.

4. Wärmespeicher (2) nach einem der Ansprüche 1 bis 3, **dadurch gekennzeichnet, dass** die elektrisch isolierende Schicht (10) mehrere Unterschichten aus elektrisch isolierenden Materialien umfasst.

5. Wärmespeicher (2) nach Anspruch 4, **dadurch gekennzeichnet, dass** die Unterschichten aus elektrisch isolierenden Materialien aus wenigstens einem isolierenden Polymermaterial gebildet sind.

6. Wärmespeicher (2) nach einem der Ansprüche 1 bis 5, **dadurch gekennzeichnet, dass** die erste SiebdruckWiderstandsbahn (7a) ein Muster bildet, das von dem Muster, das die zweite Siebdruck-Widerstandsbahn (7b) bildet, verschieden ist.

7. Wärmespeicher (2) nach einem der Ansprüche 1 bis 6, **dadurch gekennzeichnet, dass** die erste SiebdruckWiderstandsbahn (7a) mit einer Spannung von 230 V versorgt wird und die zweite Siebdruck-Widerstandsbahn (7b) mit einer Spannung von 12 V versorgt wird, wobei die erste Siebdruck-Widerstandsbahn (7a) jene Bahn ist, die sich am nächsten bei dem Boden (3) des Wärmespeichers (2) befindet.

8. Tragbares Gerät (1), **dadurch gekennzeichnet, dass** es einen Wärmespeicher (2) nach einem der vorhergehenden Ansprüche enthält, wobei das tragbare Gerät (1) einen abnehmbaren Deckel (11), der dafür ausgelegt ist, den Wärmespeicher (2) dicht zu verschließen, und eine Schutzhaube (12), die den Wärmespeicher (2) aufnimmt und so mit diesem eine Doppelwand bildet, umfasst.

9. Tragbares Gerät (1) nach Anspruch 8, **dadurch gekennzeichnet, dass** es einen einzigen Verbinder (13) umfasst, mit dem sämtliche elektrischen Verbindungsanschlüsse (8a, 8b, 8c, 8d) der zwei SiebdruckWiderstandsbahnen (7a, 7b) verbunden sind.

10. Tragbares Gerät (1) nach Anspruch 9, **dadurch gekennzeichnet, dass** der Verbinder (13) ein Steckverbinder (13) ist, der vier Stifte (14a, 14b, 14c, 14d) umfasst, wovon zwei Stifte (14a, 14b) für eine erste Versorgungsspannung vorgesehen sind und mit der ersten Siebdruck-Widerstandsbahn (7a) verbunden sind und zwei andere Stifte (14c, 14d) für eine zweite Versorgungsspannung vorgesehen sind und mit der zweiten SiebdruckWiderstandsbahn (7b) verbunden sind.

11. Tragbares Gerät (1) nach Anspruch 10, **dadurch gekennzeichnet, dass** es ein abnehmbares Versorgungskabel umfasst, das dafür ausgelegt ist, mit dem Steckverbinder (13) verbunden zu werden, um an ihn eine im Voraus definierte Versorgungsspannung zu liefern, wobei das Versorgungskabel an einem seiner Enden einen Buchsenverbinder aufweist, der vier Öffnungen enthält, die dafür ausgelegt sind, die vier Stifte (14a, 14b, 14c, 14d) des Steckverbinders (13) aufzunehmen, wobei zwei Öffnungen des Buchsenverbinders dafür ausgelegt sind, die im Voraus definierte Versorgungsspannung zu liefern und zwei Stifte (14a, 14b) des Steckverbinders (13) aufzunehmen, die für diese im Voraus definierte Versorgungsspannung vorgesehen sind, und die zwei anderen Öffnungen des Buchsenverbinders (13) dafür ausgelegt sind, die zwei anderen Stifte (14c, 14d) des Steckverbinders (13), die für eine andere Versorgungsspannung vorgesehen sind, abzudecken.

12. Verfahren für die Herstellung eines Wärmespeichers (2) nach einem der Ansprüche 1 bis 7, **dadurch gekennzeichnet, dass** es die folgenden aufeinander folgenden Schritte umfasst:
a) Erhalten eines Behälters, der einen Boden (3) aufweist, der eine äußere Oberfläche (5) besitzt;
b) Ablagern durch Siebdruck einer ersten Siebdruck-Widerstandsbahn (7a) auf der äußeren Oberfläche (5) des Bodens (3) des Wärmespeichers (2), wobei die erste Siebdruck-Widerstandsbahn (7a) zwei Verbindungsenden (9a, 9b) aufweist und dafür ausgelegt ist, einer ersten Versorgungsspannung zu dienen;
c) Brennen der ersten Siebdruck-Widerstandsbahn (7a);
d) Ablagern durch Siebdruck wenigstens einer elektrisch isolierenden Schicht (10) auf der äußeren Oberfläche (5) des Bodens (3), um wenigstens die erste Siebdruck-Widerstandsbahn (7a) abzudecken;
e) Brennen der elektrisch isolierenden Schicht (10) ;
f) Ablagern durch Siebdruck einer zweiten Siebdruck-Widerstandsbahn (7b) auf der elektrisch isolierenden Schicht (10), wobei die zweite SiebdruckWiderstandsbahn (7b) zwei Verbindungsenden (9c, 9d) aufweist und dafür ausgelegt sind, einer zweiten Versorgungsspannung zu dienen;
g) Brennen der zweiten Siebdruck-Widerstandsbahn (7b);
h) Ablagern durch Siebdruck von elektrischen Verbindungsanschlüssen (8a, 8b, 8c, 8d) wenigstens auf den Verbindungsenden (9a, 9b, 9c, 9d) der zwei SiebdruckWiderstandsbahnen (7a, 7b);
i) Brennen der elektrischen Verbindungsanschlüsse (8a, 8b, 8c, 8d).

13. Verfahren für die Herstellung eines Wärmespeichers (2) nach Anspruch 12, **dadurch gekennzeichnet, dass** im Schritt des Ablagerns durch Siebdruck der elektrisch isolierenden Schicht (10) die zwei Verbindungsenden (9a, 9b) der ersten Siebdruck-Widerstandsbahn (7a) nicht mit der elektrisch isolierenden Schicht (10) abgedeckt werden.

## Claims

1. A heating recipient (2) for a transportable apparatus (1) intended for heating food, said heating recipient (2) ,comprising a bottom (3) and a lateral wall (6) rising from the bottom (3), said bottom (3) exhibiting an internal surface intended to receive food and an external surface (5) on which are disposed at least one first screen printed resistor track (7a) and one second screen printed resistor track (7b), each screen printed resistor track (7a, 7b) exhibiting two connecting ends (9a, 9b, 9c, 9d) each connected to an electric connecting stud (8a, 8b, 8c, 8d) for the electric supply thereof, **characterized in that** the screen printed resistor tracks (7a, 7b) are superimposed and separated by an electrically insulating layer (10).

2. The heating recipient (2) according to claim 1, **characterized in that** the screen printed resistor tracks (7a, 7b) are supplied with different voltages.

3. The heating recipient (2) according to claim 1 or 2, **characterized in that** the electrically insulating layer (10) covers the entire external surface (5) of the bottom (3), except for the connecting ends (9a, 9b) of the first screen printed resistor track (7a).

4. The heating recipient (2) according to any one of claims 1 to 3, **characterized in that** the electrically insulating layer (10) comprises several sub-layers of electrically insulating materials.

5. The heating recipient (2) according to claim 4, **characterized in that** the sub-layers of electrically insulating materials are formed by at least one insulating polymer material.

6. The heating recipient (2) according to any one of claims 1 to 5, **characterized in that** the first screen printed resistor track (7a) forms a pattern which is different from the pattern forming the second screen printed resistor track (7b).

7. The heating recipient (2) according to any one of claims 1 to 6, **characterized in that** the first screen printed resistor track (7a) is supplied by a voltage of 230 V, and the second screen printed resistor track (7b) is supplied by a voltage of 12 V, the first screen printed resistor track (7a) being the track nearest to the bottom (3) of the heating recipient (2).

8. A transportable apparatus (1), **characterized in that** it comprises a heating recipient (2) such as defined by any one of the preceding claims, said transportable apparatus (1) comprising a removable lid (11) suitable for hermetically closing the heating recipient (2), and a protective shell (12) receiving the heating recipient (2), thus forming a double wall with it.

9. The transportable apparatus (1) according to claim 8, **characterized in that** it comprises a unique connector (13) to which are connected all the electric connecting studs (8a, 8b, 8c, 8d) of the two screen printed resistor tracks (7a, 7b).

10. The transportable apparatus (1) according to claim 9, **characterized in that** the connector (13) is a male connector (13) comprising four pins (14a, 14b, 14c, 14d) of which two pins (14a, 14b) dedicated to a first supply voltage and connected to the first screen printed resistor track (7a), and two other pins (14c, 14d) dedicated to a second supply voltage and connected to the second screen printed resistor track (7b).

11. The transportable apparatus (1) according to claim 10, **characterized in that** it comprises a removable supply cord suitable for being connected to the male connector (13) to provide it with a predefined supply voltage, said supply cord comprising a female connector at one of its ends comprising four orifices suitable for receiving the four pins (14a, 14b, 14c, 14d) of the male connector (13), two of the orifices of the female connector being suitable for providing said predefined supply voltage and receiving two pins (14a, 14b) of the male connector (13) dedicated for this predefined supply voltage, and the two other orifices of the female connector (13) being suitable for masking the two other pins (14c, 14d) of the male connector (13) dedicated to another supply voltage.

12. A method for manufacturing a heating recipient (2) such as defined by any one of claims 1 to 7, **characterized in that** it comprises the following successive steps:
a) obtaining a recipient comprising a bottom (3) exhibiting an external surface (5);
b) depositing by screen printing of a first screen printed resistor track (7a) on the external surface (5) of the bottom (3) of the heating recipient (2), said first screen printed resistor track (7a) comprising two connecting ends (9a, 9b) and being suitable for operating under a first supply voltage;
c) curing of said first screen printed resistor track (7a);
d) depositing by screen printing at least one electrically insulating layer (10) on the external surface (5) of the bottom (3) to cover at least the first screen printed resistor track (7a);
e) curing of the electrically insulating layer (10);
f) depositing by screen printing a second screen printed resistor track (7b) on the electrically insulating layer (10), said second screen printed resistor track (7b) comprising two connecting ends (9c, 9d) and being suitable for operating under a second supply voltage;
g) curing of said second screen printed resistor track (7b);
h) depositing by screen printing electric connecting studs (8a, 8b, 8c, 8d) on at least the connecting ends (9a, 9b, 9c, 9d) of the two screen printed resistor tracks (7a, 7b);
i) curing of the electric connecting studs (8a, 8b, 8c, 8d).

13. The method for manufacturing a heating recipient (2) according to claim 12, **characterized in that**, during the step of depositing by screen printing of the electrically insulating layer (10), the two connecting ends (9a, 9b) of the first screen printed resistor track (7a) are not covered by the electrically insulating layer (10).
